# FASCICULE DE BREVET EUROPEEN

(11) **EP 3 480 480 B1**
(45) Date de publication et mention de la délivrance du brevet: **24.06.2020**
(21) Numéro de dépôt: 18203425.6
(22) Date de dépôt: 30.10.2018
(51) Int. Cl.: F16C 7/06

(54) **BIELLE REGLABLE EN LONGUEUR**
LÄNGENREGULIERBARE PLEUELSTANGE
LENGTH-ADJUSTABLE ROD

(30) Priorité: 06.11.2017 FR 1760364
(43) Date de publication de la demande: 08.05.2019
(73) Titulaire: AIRBUS OPERATIONS (S.A.S.), 31060 Toulouse (FR)
(72) Inventeur: LOPEZ, José, 31480 BELLESSERRE (FR)
(74) Mandataire: Gicquel, Olivier Yves Gérard

(56) Documents cités:
- EP-A1- 0 492 289
- US-A1- 2016 003 290

## Description

La présente demande se rapporte à une bielle réglable en longueur.

De manière connue, une bielle comprend :
- un corps longiligne qui présente un axe longitudinal,
- une première tête de fixation, positionnée à une première extrémité du corps, comportant un premier trou traversant qui présente un premier axe sécant à l'axe longitudinal, et
- une deuxième tête de fixation, positionnée à une deuxième extrémité du corps, comportant un deuxième trou traversant qui présente un deuxième axe sécant à l'axe longitudinal.

Sur le plan fonctionnel, une bielle permet de relier deux éléments en maintenant une distance constante et en assurant la transmission des efforts entre les deux éléments reliés. Pour la suite de la description, la longueur de la bielle correspond à l'entraxe, séparant les premier et deuxième axes, mesuré au niveau de l'axe longitudinal.

Selon un mode de réalisation, pour obtenir une bielle réglable en longueur, le corps comprend une première partie, qui présente un fût taraudé, et une deuxième partie, qui présente une tige filetée comportant un seul filet continu en forme d'hélice configurée pour se visser dans le fût taraudé de la première partie. Ainsi, il est possible de modifier la longueur de la bielle en vissant plus ou moins les première et deuxième parties l'une par rapport à l'autre. Un contre-écrou est prévu pour immobiliser les première et deuxième parties dans la position réglée.

Selon ce mode de réalisation, il n'est pas possible de modifier la longueur de la bielle sans modifier l'orientation d'un des premier et deuxième axes des trous traversants.

Le document US2016003290 décrit un bras de liaison réglable en longueur. Ce bras de liaison comprend une tige centrale et deux têtes reliées aux extrémités de la tige centrale. Chaque extrémité de la tige centrale est configurée pour se loger dans un logement prévu au niveau de chaque tête et comprend une pluralité de crans. Pour régler la longueur du bras de liaison, il est nécessaire de tirer sur les têtes et entraine une déformation non élastique des crans et des têtes.

La présente invention vise à remédier aux inconvénients de l'art antérieur.

A cet effet, l'invention a pour objet une bielle comprenant des première et deuxième parties présentant chacune une tête de fixation,
- la première partie comportant un cylindre, coaxial à un axe longitudinal, qui présente une face périphérique,
- la deuxième partie comportant un fût, coaxial à l'axe longitudinal lorsque les première et deuxième parties sont assemblées, qui présente une face latérale extérieure, une face latérale intérieure, configurée pour recevoir au moins partiellement le cylindre de la première partie et ayant un diamètre intérieur sensiblement égal au diamètre de la face périphérique de la première partie ainsi qu'un chant d'extrémité annulaire reliant les faces latérales intérieure et extérieure.

Selon l'invention, la face périphérique de la première partie comprend une succession de gorges périphériques séparées les unes des autres, positionnées dans des plans transversaux et qui s'étendent chacune sur toute la circonférence de la première partie. En parallèle, le fût comprend plusieurs découpes, configurées pour séparer le fût en plusieurs secteurs de cylindre entre les découpes, et au moins une nervure intérieure, en saillie par rapport à la face latérale intérieure, qui a une section configurée pour se loger dans l'une des gorges périphériques de la première partie, le fût étant configuré pour occuper un premier état, dans lequel les secteurs de cylindre sont plaqués contre la face périphérique de la première partie et dans lequel la nervure intérieure est logée dans l'une des gorges périphériques, et un deuxième état déformé de manière élastique dans lequel la nervure intérieure est positionnée en dehors des gorges périphériques.

Selon l'invention, la succession de gorges périphériques permet de régler l'entraxe de la bielle. Les gorges périphériques étant séparées et positionnées dans des plans transversaux, les première et deuxième parties de la bielle peuvent pivoter l'une par rapport à l'autre sans que l'entraxe ne soit modifié.

Selon une autre caractéristique, la bielle comprend un premier système de verrouillage, configuré pour maintenir le fût dans le premier état, qui comporte une bague configurée pour occuper une première position dans laquelle la bague est emmanchée autour du fût et le maintient dans le premier état et une deuxième position dans laquelle la bague est retirée du fût.

Selon une configuration, le fût comprend une nervure extérieure, en saillie par rapport à la face latérale extérieure, positionnée de manière à immobiliser la bague dans la première position.

Selon un mode de réalisation, la nervure extérieure est positionnée au niveau du chant d'extrémité annulaire et présente une face inférieure dans un même plan que le chant d'extrémité annulaire.

Selon une autre caractéristique, la bielle comprend un deuxième système de verrouillage, configuré pour maintenir la bague dans la première position, qui comporte au moins un crochet présentant une première extrémité reliée à la bague et une deuxième extrémité configurée pour coopérer avec la nervure extérieure du fût.

Selon une configuration, chaque crochet comprend une languette qui comporte un cran présentant une face d'arrêt, sensiblement perpendiculaire à l'axe longitudinal lorsque la bague est dans la première position, ladite face d'arrêt étant configurée pour prendre appui contre une face inférieure de la nervure extérieure lorsque la bague est dans la première position.

Selon un mode de réalisation, chaque crochet comprend un pan incliné configuré pour favoriser la mise en place de la bague dans la première position.

Selon une autre caractéristique, la nervure intérieure présente des formes favorisant l'introduction de la première partie de la bielle dans le fût de la deuxième partie.

Selon une configuration, la nervure intérieure est distante du chant d'extrémité annulaire.

Selon une autre caractéristique, le premier état correspond à un état non-déformé du fût et le deuxième état correspond à un état déformé de manière élastique du fût.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une bielle réglée à une première longueur qui illustre un mode de réalisation de l'invention,
- La figure 2 est une vue en perspective de la bielle, visible sur la figure 1, réglée à une deuxième longueur,
- La figure 3 est une vue en éclaté des différents éléments de la bielle visible sur la figure 1,
- La figure 4 est une vue en perspective d'une partie de la bielle, visible sur la figure 1, à l'état désassemblé,
- La figure 5A est un schéma d'une partie d'une bielle réglable en longueur qui illustre un mode de réalisation de l'invention à l'état désassemblé, et
- La figure 5B est un schéma d'une partie de la bielle réglable en longueur visible sur la figure 5A à l'état assemblé et réglé.

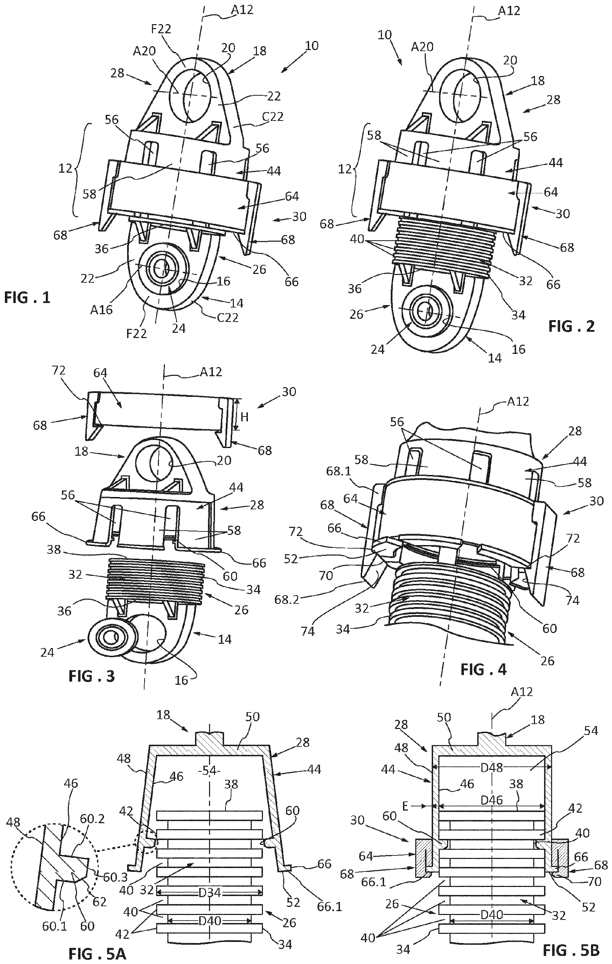

Selon un mode de réalisation visible sur les figures 1 et 2, une bielle 10 comprend :
- un corps 12 qui présente un axe longitudinal A12,
- une première tête de fixation 14, positionnée à une première extrémité du corps 12, comportant un premier trou traversant 16 qui présente un premier axe A16 sécant à l'axe longitudinal A12, et
- une deuxième tête de fixation 18, positionnée à une deuxième extrémité du corps 12, comportant un deuxième trou traversant 20 qui présente un deuxième axe A20 sécant à l'axe longitudinal A12.

Selon un mode de réalisation, chaque tête de fixation 14, 18 comprend une plaque 22 qui présente deux faces F22 parallèles entre elles et à l'axe longitudinal A12 ainsi qu'un chant C22 qui présente un profil approximativement triangulaire avec un sommet arrondi. Selon une configuration, les premier et deuxième trous traversants 16, 20 débouchent au niveau des faces F22 et les premier et deuxième axes A16, A20 sont perpendiculaires aux faces F22 Au moins l'un des premier et deuxième trous traversants 16, 20 peut être équipé d'un palier 24, d'un roulement, d'une bague coulissante pour obtenir une liaison pivotante entre une des têtes de fixation de la bielle et un axe auquel la bielle est reliée.

Bien entendu, l'invention n'est pas limitée à ce mode de réalisation pour les têtes de fixation 14, 18.

Pour obtenir une bielle réglable en longueur, le corps 12 comprend des première et deuxième parties 26, 28 configurées pour coopérer entre elles selon plusieurs positions, en fonction de la longueur souhaitée, et un premier système de verrouillage 30 pour maintenir les première et deuxième parties 26, 28 dans la position souhaitée.

La première partie 26 supportant la première tête de fixation 14 comprend un cylindre 32, coaxial à l'axe longitudinal A12, qui présente une face périphérique 34, une première face terminale 36 supportant la première tête de fixation 14 et une deuxième face terminale 38 orientée vers la deuxième partie 28 lorsque les première et deuxième parties sont assemblées.

Comme illustré en détails sur les figures 5A et 5B, la face périphérique 34 comprend une succession de gorges périphériques 40, séparées les unes des autres, positionnées dans des plans transversaux (perpendiculaires à l'axe longitudinal A12). Chaque gorge périphérique 40 s'étend sur toute la circonférence de la première partie 26.

Les gorges périphériques 40 sont séparées par des nervures en saillie qui forment des crans 42.

Selon un mode de réalisation, la face périphérique 34 comprend une alternance de gorges périphériques 40 et de crans 42 de la première face terminale 36 jusqu'à la deuxième face terminale 38. En variante, la face périphérique 34 comprend une alternance de gorges périphériques 40 et de crans 42 seulement sur une portion de la hauteur de la face périphérique 34.

Selon une configuration, les gorges périphériques 40 sont toutes identiques. Elles ont, dans un plan longitudinal, une section en U avec des branches positionnées dans des plans transversaux. Il en est de même des crans 42. Les gorges périphériques 40 ont un diamètre référencé D40 et la face périphérique 34 a un diamètre D34.

Quel que soit le mode de réalisation, l'alternance de gorges périphériques 40 et de crans 42 s'étend sur une hauteur correspondant à la différence entre les longueurs minimale et maximale de la bielle 10.

Les formes des gorges périphériques 40 et des crans 42 sont déterminées en fonction des caractéristiques mécaniques recherchées et de la précision de réglage souhaitée, l'espacement entre deux gorges périphériques 40 successives correspondant au pas du réglage de la longueur de la bielle 10.

Pour réduire la masse de la bielle 10, le cylindre 32 de la première partie peut être creux.

La deuxième partie 28 supportant la deuxième tête de fixation 18 comprend un fût 44, cylindrique et creux, coaxial à l'axe longitudinal A12 lorsque les première et deuxième parties 26, 28 sont assemblées, qui présente une face latérale intérieure 46, une face latérale extérieure 48, une paroi transversale 50 à une première extrémité du fût 44 (qui supporte la deuxième tête de fixation 18) et un chant d'extrémité annulaire 52 à une deuxième extrémité du fût 44, positionné dans un plan transversal.

La paroi transversale 50 et la face latérale intérieure 46 délimitent un logement 54 configuré pour recevoir au moins partiellement le cylindre 32 de la première partie 26.

La face latérale intérieure 46 a un diamètre intérieur D46 sensiblement égal au diamètre D34 de la face périphérique 34 de la première partie 26.

Le fût 44 comprend plusieurs découpes 56 qui relient les faces latérales intérieure et extérieure 46, 48 et qui s'étendent à partir du chant d'extrémité annulaire 52 sur une certaine hauteur de manière à séparer le fût 44 en plusieurs secteurs de cylindre 58 entre les découpes 56. Selon une configuration visible sur la figure 3, les découpes 56 s'étendent du chant d'extrémité annulaire 52 jusqu'à la paroi transversale 50.

Les découpes 56 sont sensiblement parallèles à l'axe longitudinal A12.

Selon le mode de réalisation visible sur les figures 1 et 2, le fût 44 comprend six découpes 56, uniformément réparties sur sa circonférence, et six secteurs de cylindre 58.

Chaque secteur de cylindre 58 est déformable de manière élastique pour permettre à la partie du chant d'extrémité annulaire 52 de chaque secteur de cylindre 58 d'occuper une position plus ou moins éloignée de l'axe longitudinal A12, comme illustré sur les figures 5A et 5B.

La face latérale intérieure 46 comprend au moins une nervure intérieure 60, en saillie vers l'axe longitudinal A12 par rapport à la face latérale intérieure 46, positionnée dans un plan transversal et qui a une section dans un plan longitudinal (plan passant par l'axe longitudinal A12) configurée pour se loger dans l'une des gorges périphériques 40. Selon une configuration, la nervure intérieure 60 s'étend sur toute la circonférence de la face latérale intérieure 46, à l'exception des découpes 56.

Selon un mode de réalisation, la nervure intérieure 60 est distante du chant d'extrémité annulaire 52.

Dans un premier état illustré par la figure 5A, le fût 44 est cylindrique, les secteurs de cylindre 58 sont plaqués contre la face périphérique 34 de la première partie 26 et la nervure intérieure 60 est logée dans l'une des gorges périphériques 40.

Dans un deuxième état illustré par la figure 5B, le fût 44 a une forme évasée, les extrémités des secteurs de cylindre 58 sont plus écartées de l'axe longitudinal A12 par rapport au premier état et la nervure intérieure 60 est positionnée en dehors des gorges périphériques 40.

Le premier état correspond à l'état non-déformé du fût 44 et le deuxième état correspond à un état déformé de manière élastique. Par déformé de manière élastique, on entend que le fût 44 revient dans le premier état non-déformé en l'absence de contrainte.

La nervure intérieure 60 comprend une première face transversale annulaire 60.1 (dans un plan transversal) orientée vers le chant d'extrémité annulaire 52, une deuxième face transversale annulaire 60.2 (dans un plan transversal) orientée vers la paroi transversale 50, parallèle à la première face transversale annulaire 60.1, et un chant cylindrique 60.3 qui relie les première et deuxième faces transversales annulaires 60.1 et 60.2.

Selon un mode de réalisation, la nervure intérieure 60 comprend un premier chanfrein 62, qui relie la première face transversale annulaire 60.1 et le chant cylindrique 60.3 pour favoriser la déformation des secteurs de cylindre 58 lorsque la première partie 26 est introduite dans le fût 44 de la deuxième partie 28. La nervure intérieure 60 peut comprendre un deuxième chanfrein qui relie la deuxième face transversale annulaire 60.2 et le chant cylindrique 60.3.

En variante, le chant 60.3 peut ne pas être cylindrique mais conique pour favoriser l'introduction de la première partie 26 dans le fût 44.

Selon une autre caractéristique, le premier système de verrouillage 30 comprend une bague 64 configurée pour s'emmancher sur le fût 44 afin de le maintenir dans le premier état. La bague 64 a un diamètre intérieur sensiblement égal au diamètre extérieur D48 de la face latérale extérieure 48 du fût 44. La hauteur H de la bague 64 est supérieure ou égale à la distance séparant le chant d'extrémité annulaire 52 et la deuxième face transversale annulaire 60.2 de la nervure 60.

Ainsi, la bague 64 est configurée pour occuper une première position, visible sur la figure 5B, dans laquelle elle est emmanchée autour du fût 44 et le maintient dans le premier état et une deuxième position, visible sur la figure 5A, dans laquelle la bague 64 est retirée du fût 44. Le fût 44 comprend une nervure extérieure 66 en saillie vers l'extérieur du fût 44 par rapport à la face latérale extérieure 48 et positionnée de manière à immobiliser la bague 64 dans la première position. Selon une configuration, la nervure extérieure 66 est positionnée au niveau du chant d'extrémité annulaire 52 et présente une face inférieure 66.1 dans un même plan que le chant d'extrémité annulaire 52.

Selon une configuration, cette nervure extérieure 66 s'étend sur toute la circonférence de la face latérale extérieure 48, à l'exception des découpes 56.

Dans la première position, la bague 64 vient en butée contre la nervure extérieure 66.

Selon une configuration, la bague 64 a une épaisseur E sensiblement égale à la hauteur de la nervure extérieure 66 (dimension prise selon une direction perpendiculaire à l'axe longitudinal A12).

Selon une autre caractéristique, la bielle 10 comprend un deuxième système de verrouillage configuré pour maintenir la bague 64 dans la première position.

Ce deuxième système de verrouillage comprend au moins un crochet 68, qui présente une première extrémité 68.1 reliée à la bague 64 et une deuxième extrémité 68.2 configurée pour coopérer avec la nervure extérieure 66 du fût 44.

Selon un mode de réalisation, le deuxième système de verrouillage comprend deux crochets 68 diamétralement opposés.

Chaque crochet 68 comprend une languette, parallèle à l'axe longitudinal A12 lorsque la bague 64 est dans la première position, qui comprend au niveau de sa face intérieure (orientée vers le centre de la bague 64) un cran 70.

Ce cran 70 présente une face d'arrêt 72, sensiblement perpendiculaire à l'axe longitudinal A12 lorsque la bague 64 est dans la première position, qui est configurée pour prendre appui contre la face inférieure 66.1 de la nervure extérieure 66. Le crochet 68 comprend un pan incliné 74 configuré pour favoriser la mise en place de la bague 64 dans la première position. Ce plan incliné 74 est prévu au niveau de la face intérieure de la languette et s'étend de la face d'arrêt 72 jusqu'à la pointe de l'extrémité de la languette.

Lorsque la bague 64 est dans la première position, la face d'arrêt 72 de chaque crochet 68 vient en butée contre la face inférieure 66.1 de la nervure extérieure 66 du fût 44 et empêche le retrait de la bague 64. Les crochets 68 sont suffisamment souples pour se déformer de manière élastique vers l'extérieur de la bague 64 afin de retirer la bague 64 ou permettre au cran 70 de passer sous la nervure extérieure 66 lors de la mise en place de la bague 64. Le pan incliné 74 favorise cette déformation.

Le principe de fonctionnement de la bielle 10 est maintenant décrit.

Dans un premier temps, la première partie 26 est introduite dans le fût 44 de la deuxième partie 28. Les secteurs de cylindre 58 s'écartent à chaque passage de la nervure intérieure 60 au niveau d'un cran 42. La forme de la nervure intérieure 60 favorise le passage des crans 42. La nervure intérieure 60 est immobilisée dans l'une des gorges périphériques 40 en fonction de l'entraxe souhaité entre les premier et deuxième axes A16, A20. La bielle 10 est réglée avec un entraxe minimal sur la figure 1 et un entraxe maximal sur la figure 2.

Lorsque l'entraxe est réglé, la bague 64 est emmanchée sur le fût 44 de la deuxième partie 28 jusqu'à venir en butée contre la nervure extérieure 66 du fût 44. Lors de cette mise en place, les crochets 68 se déforment de manière élastique lors du passage de la nervure extérieure 66 par le cran 70 de chaque crochet 68. Dès que le cran 70 de chaque crochet 68 a passé la nervure extérieure 66, sa face d'arrêt 72 vient en butée contre la face inférieure 66.1 de la nervure extérieure 66. Dès lors, la bague 64 est verrouillée dans la première position et maintient en position les première et deuxième parties 26 et 28 dans la position réglée.

Grâce aux gorges périphériques 40, les première et deuxième parties 26 et 28 peuvent pivoter l'une par rapport à l'autre sans que l'entraxe ne soit modifié.

## Revendications

1. Bielle comprenant des première et deuxième parties (26, 28) présentant chacune une tête de fixation (14, 18),
- la première partie (26) comportant un cylindre (32), coaxial à un axe longitudinal (A12), qui présente une face périphérique (34),
- la deuxième partie (28) comportant un fût (44), coaxial à l'axe longitudinal (A12) lorsque les première et deuxième parties (26, 28) sont assemblées, qui présente une face latérale extérieure (48), une face latérale intérieure (46) configurée pour recevoir au moins partiellement le cylindre (32) de la première partie (26) et ayant un diamètre intérieur (D46) sensiblement égal au diamètre (D34) de la face périphérique (34) de la première partie (26) ainsi qu'un chant d'extrémité annulaire (52) reliant les faces latérales intérieure et extérieure (46, 48),
**caractérisée en ce que** la face périphérique (34) de la première partie (26) comprend une succession de gorges périphériques (40), séparées les unes des autres par des crans (42), positionnées dans des plans transversaux et qui s'étendent chacune sur toute la circonférence de la première partie (26) et **en ce que** le fût (44) comprend plusieurs découpes (56) configurées pour séparer le fût (44) en plusieurs secteurs de cylindre (58) entre les découpes (56) et au moins une nervure intérieure (60), en saillie par rapport à la face latérale intérieure (46), qui a une section configurée pour se loger dans l'une des gorges périphériques (40) de la première partie (26), le fût (44) étant configuré pour occuper un premier état, dans lequel les secteurs de cylindre (58) sont plaqués contre la face périphérique (34) de la première partie (26) et dans lequel la nervure intérieure (60) est logée dans l'une des gorges périphériques (40), et un deuxième état déformé de manière élastique dans lequel la nervure intérieure (60) est positionnée en dehors des gorges périphériques (40).

2. Bielle selon la revendication 1, **caractérisée en ce que** la bielle comprend un premier système de verrouillage, configuré pour maintenir le fût (44) dans le premier état, qui comporte une bague (64) configurée pour occuper une première position dans laquelle la bague (64) est emmanchée autour du fût (44) et le maintient dans le premier état et une deuxième position dans laquelle la bague (64) est retirée du fût (44).

3. Bielle selon la revendication 2, **caractérisée en ce que** le fût (44) comprend une nervure extérieure (66), en saillie par rapport à la face latérale extérieure (48), positionnée de manière à immobiliser la bague (64) dans la première position.

4. Bielle selon la revendication précédente, **caractérisée en ce que** la nervure extérieure (66) est positionnée au niveau du chant d'extrémité annulaire (52) et présente une face inférieure (66.1) dans un même plan que le chant d'extrémité annulaire (52).

5. Bielle selon l'une des revendications 3 à 4, **caractérisée en ce que** la bielle comprend un deuxième système de verrouillage, configuré pour maintenir la bague (64) dans la première position, qui comporte au moins un crochet (68) présentant une première extrémité (68.1) reliée à la bague (64) et une deuxième extrémité (68.2) configurée pour coopérer avec la nervure extérieure (66) du fût (44).

6. Bielle selon la revendication précédente, **caractérisée en ce que** chaque crochet (68) comprend une languette qui comporte un cran (70) présentant une face d'arrêt (72), sensiblement perpendiculaire à l'axe longitudinal (A12) lorsque la bague (64) est dans la première position, ladite face d'arrêt (72) étant configurée pour prendre appui contre une face inférieure (66.1) de la nervure extérieure (66) lorsque la bague (64) est dans la première position.

7. Bielle selon la revendication précédente, **caractérisée en ce que** chaque crochet (68) comprend un pan incliné (74) configuré pour favoriser la mise en place de la bague (64) dans la première position.

8. Bielle selon l'une des revendications précédentes, **caractérisée en ce que** la nervure intérieure (60) présente des formes favorisant l'introduction de la première partie (26) dans le fût (44) de la deuxième partie (28).

9. Bielle selon l'une des revendications précédentes, **caractérisée en ce que** la nervure intérieure (60) est distante du chant d'extrémité annulaire (52).

10. Bielle selon l'une des revendications précédentes, **caractérisée en ce que** le premier état correspond à un état non-déformé du fût (44) et le deuxième état correspond à un état déformé de manière élastique du fût (44).

## Patentansprüche

1. Pleuelstange, die erste und zweite Teile (26, 28) umfasst, die jeweils einen Befestigungskopf (14, 18) aufweisen,
- wobei der erste Teil (26) einen koaxial zu einer Längsachse (A12) verlaufenden Zylinder (32) beinhaltet, der eine umlaufende Fläche (34) aufweist,
- wobei der zweite Teil (28) einen Schaft (44) beinhaltet, der koaxial zur Längsachse (A12) verläuft, wenn die ersten und zweiten Teile (26, 28) montiert sind, und der eine äußere Seitenfläche (48), eine innere Seitenfläche (46), die dazu ausgestaltet ist, den Zylinder (32) des ersten Teils (26) zumindest teilweise aufzunehmen, und einen Innendurchmesser (D46) hat, der im Wesentlichen gleich dem Durchmesser (D34) der umlaufenden Fläche (34) des ersten Teils (26) ist, sowie eine ringförmige Endkante (52), welche die inneren und äußeren Seitenflächen (46, 48) verbindet, aufweist,
**dadurch gekennzeichnet, dass** die umlaufende Fläche (34) des ersten Teils (26) eine Folge von umlaufenden Nuten (40) umfasst, die voneinander durch Rastelemente (42) getrennt sind, in Querebenen angeordnet sind und sich jeweils über den gesamten Umfang des ersten Teils (26) erstrecken, dass der Schaft (44) mehrere Ausschnitte (56) umfasst, die dazu ausgestaltet sind, den Schaft (44) in mehrere Zylindersegmente (58) zwischen den Ausschnitten (56) zu teilen, und mindestens eine innere Rippe (60), die in Bezug auf die innere Seitenfläche (46) absteht und einen Querschnitt hat, der dazu ausgestaltet ist, in einer der umlaufenden Nuten (40) des ersten Teils (26) aufgenommen zu werden, wobei der Schaft (44) dazu ausgestaltet ist, einen ersten Zustand, in dem die Zylindersegmente (58) gegen die umlaufende Fläche (34) des ersten Teils (26) gedrückt sind und in der die innere Rippe (60) in einer der umlaufenden Nuten (40) aufgenommen ist, und einen zweiten elastisch verformten Zustand, in dem die innere Rippe (60) außerhalb der Umfangsnuten (40) angeordnet ist, einzunehmen.

2. Pleuelstange nach Anspruch 1, **dadurch gekennzeichnet, dass** die Pleuelstange ein erstes Verriegelungssystem umfasst, das dazu ausgestaltet ist, den Schaft (44) in einem ersten Zustand zu halten, und das einen Ring (64) beinhaltet, der dazu ausgestaltet ist, eine erste Position, in welcher der Ring (64) um den Schaft (44) herum aufgesteckt ist und ihn in dem ersten Zustand hält, und eine zweite Position, in welcher der Ring (64) vom Schaft (44) abgezogen ist, einzunehmen.

3. Pleuelstange nach Anspruch 2, **dadurch gekennzeichnet, dass** der Schaft (44) eine äußere Rippe (66) umfasst, die in Bezug auf die äußere Seitenfläche (48) absteht und die so angeordnet ist, dass sie den Ring (64) in der ersten Position blockiert.

4. Pleuelstange nach dem vorhergehenden Anspruch, **dadurch gekennzeichnet, dass** die äußere Rippe (66) auf Höhe der ringförmigen Endkante (52) angeordnet ist und eine untere Fläche (66.1) in derselben Ebene wie die ringförmige Endkante (52) aufweist.

5. Pleuelstange nach einem der Ansprüche 3 bis 4, **dadurch gekennzeichnet, dass** die Pleuelstange ein zweites Verriegelungssystem umfasst, das dazu ausgestaltet ist, den Ring (64) in der ersten Position zu halten, und das mindestens einen Haken (68) beinhaltet, der ein erstes Ende (68.1), das mit dem Ring (64) verbunden ist, und ein zweites Ende (68.2), das dazu ausgestaltet ist, mit der äußeren Rippe (66) des Schaftes (44) zusammenzuwirken, aufweist.

6. Pleuelstange nach dem vorhergehenden Anspruch, **dadurch gekennzeichnet, dass** der Haken (68) eine Zunge umfasst, die ein Rastelement (70) beinhaltet, das eine Stoppfläche (72) aufweist, die im Wesentlichen senkrecht zur Längsachse (A12) ist, wenn der Ring (64) in der ersten Position ist, wobei die Stoppfläche (72) dazu ausgestaltet ist, an einer unteren Fläche (66.1) der äußeren Rippe (66) zur Anlage zu kommen, wenn der Ring (64) in der ersten Position ist.

7. Pleuelstange nach dem vorhergehenden Anspruch, **dadurch gekennzeichnet, dass** der Haken (68) eine Schräge (74) umfasst, die dazu ausgestaltet ist, das Anbringen des Rings (64) in der ersten Position zu begünstigen.

8. Pleuelstange nach einem der vorhergehenden Ansprüche, **dadurch gekennzeichnet, dass** die innere Rippe (60) Formen aufweist, die das Einführen des ersten Teils (26) in den Schaft (44) des zweiten Teils (28) begünstigen.

9. Pleuelstange nach einem der vorhergehenden Ansprüche, **dadurch gekennzeichnet, dass** die innere Rippe (60) von der ringförmigen Endkante (52) beabstandet ist.

10. Pleuelstange nach einem der vorhergehenden Ansprüche, **dadurch gekennzeichnet, dass** der erste Zustand einem nicht-verformten Zustand des Schafts (44) entspricht und der zweite Zustand einem elastisch verformten Zustand des Schafts (44) entspricht.

## Claims

1. Control rod comprising first and second parts (26, 28) each having a fixing head (14, 18),
- the first part (26) comprising a cylinder (32), coaxial to a longitudinal axis (A12), which has a peripheral face (34),
- the second part (28) comprising a barrel (44), coaxial to the longitudinal axis (A12) when the first and second parts (26, 28) are assembled, which has an outer lateral face (48), an inner lateral face (46) configured to at least partially receive the cylinder (32) of the first part (26) and having an inner diameter (D46) substantially equal to the diameter (D34) of the peripheral face (34) of the first part (26) and an annular end rim (52) linking the inner and outer lateral faces (46, 48),
**characterized in that** the peripheral face (34) of the first part (26) comprises a succession of peripheral grooves (40), separated from one another by notches (42), positioned in transverse planes and which each extend over all the circumference of the first part (26) and **in that** the barrel (44) comprises several cutouts (56) configured to divide up the barrel (44) into several cylinder sectors (58) between the cutouts (56) and at least one inner rib (60), protruding from the inner lateral face (46), which has a section configured to be housed in one of the peripheral grooves (40) of the first part (26), the barrel (44) being configured to occupy a first state, in which the cylinder sectors (58) are pressed against the peripheral face (34) of the first part (26) and in which the inner rib (60) is housed in one of the peripheral grooves (40), and an elastically deformed second state in which the inner rib (60) is positioned outside of the peripheral grooves (40).

2. Control rod according to Claim 1, **characterized in that** the control rod comprises a first locking system, configured to hold the barrel (44) in the first state, which comprises a ring (64) configured to occupy a first position in which the ring (64) is fitted around the barrel (44) and holds it in the first state and a second position in which the ring (64) is withdrawn from the barrel (44).

3. Control rod according to Claim 2, **characterized in that** the barrel (44) comprises an outer rib (66), protruding from the outer lateral face (48), positioned so as to immobilize the ring (64) in the first position.

4. Control rod according to the preceding claim, **characterized in that** the outer rib (66) is positioned level with the annular end rim (52) and has a bottom face (66.1) in the same plane as the annular end rim (52).

5. Control rod according to either of Claims 3 and 4, **characterized in that** the control rod comprises a second locking system, configured to hold the ring (64) in the first position, which comprises at least one hook (68) having a first end (68.1) linked to the ring (64) and a second end (68.2) configured to cooperate with the outer rib (66) of the barrel (44).

6. Control rod according to the preceding claim, **characterized in that** each hook (68) comprises a tongue which includes a notch (70) having a stop face (72), substantially at right angles to the longitudinal axis (A12) when the ring (64) is in the first position, said stop face (72) being configured to bear against a bottom face (66.1) of the outer rib (66) when the ring (64) is in the first position.

7. Control rod according to the preceding claim, **characterized in that** each hook (68) comprises an inclined section (74) configured to favour the placement of the ring (64) in the first position.

8. Control rod according to one of the preceding claims, **characterized in that** the inner rib (60) has forms favouring the introduction of the first part (26) into the barrel (44) of the second part (28).

9. Control rod according to one of the preceding claims, **characterized in that** the inner rib (60) is at a distance from the annular end rim (52).

10. Control rod according to one of the preceding claims, **characterized in that** the first state corresponds to a non-deformed state of the barrel (44) and the second state corresponds to an elastically deformed state of the barrel (44).
